# EUROPEAN PATENT APPLICATION

(11) **EP 4 726 124 A1**
(43) Date of publication of application: **15.04.2026**
(21) Application number: 25208535.2
(22) Date of filing: 14.10.2025
(51) Int. Cl.: E03F 5/02, B65D 90/10, E02D 29/12, E02D 29/14, H02G 9/10

(54) **ACCESS CHAMBER**

(30) Priority: 14.10.2024 IT 202400022779
(71) Applicant: Lunardon, Massimo, 31010 Monfumo (TV) (IT); Dal Moro, Gianpietro, 31030 Borso del Grappa (TV) (IT)
(72) Inventor: Lunardon, Massimo, 31010 Monfumo (TV) (IT); Dal Moro, Gianpietro, 31030 Borso del Grappa (TV) (IT)
(74) Representative: Rocchetto, Elena

(57) **Abstract**

Access chamber made of a plastic material, comprising two parts (C1, C2) made of different materials, and wherein the first, upper part (C1) comprising the edge (Cb) on which the cover (T) rests and the upper part (C1p) of the side walls (C1p, C2p) is made of virgin, non-recycled plastic, and wherein the second, lower part (C2) comprising the bottom (Cf) of the chamber and the lower part (C2p) of the side walls (C1p, C2p) is made of a recycled plastic material.

## Description

The present patent concerns access chambers and in particular concerns a new multi-material chamber.

Access chambers are manufactured from various materials, such as concrete or plastic materials.

Concrete access chambers are durable but have some drawbacks.

Concrete access chambers are heavy, and often two people or a mechanical device are needed to handle and install them.

Concrete access chambers are relatively fragile. In fact, if they fall from even a modest height, they easily break or crack.

Plastic access chambers are made by moulding resistant plastics, for example polypropylene or polyethylene.

Plastic access chambers are cheaper than concrete ones.

Plastic access chambers are manufactured from a single material, in a single colour.

Access chambers made from recycled plastic materials are increasingly widespread, as their production costs are lower compared to those made from virgin plastic.

Recycled plastic is black and consequently access chambers made of recycled plastic are black.

Access chambers in a specific colour are used for some specific applications. For example, in lawn gardens, green plastic access chambers are used, so that they are less visible and blend in better with their surroundings.

The production of coloured access chambers is expensive, because it is necessary to use colouring additives in the mass of molten virgin plastic material that is then moulded.

The production of coloured access chambers made of recycled plastic is even more expensive, as a greater quantity of colouring additives must be added to the mass of molten recycled plastic material that is then moulded.

The subject of the present invention is a new multi-material access chamber. It is an object of the present invention to provide a new access chamber that in its upper part shows a material that is different from the material used to make its non-visible part.

It is another object of the present invention to provide a new access chamber that in its upper part has a colour that is different from the colour of its non-visible part.

It is another object of the present invention to provide a new access chamber that is made of recycled plastic, with a section in a different material and/or colour visible in its upper part.

These and other direct and complementary objects are achieved by the new multi-material access chamber comprising a lower, non-visible part and an upper, visible part.

The new access chamber has a generically parallelepiped or cylindrical body. The upper edge of the new access chamber is shaped and suited to receive and support the cover of the access chamber.

The body of the new access chamber comprises two parts: a first, upper part and a second, lower part.

Said first, upper part of the new access chamber comprises the support edge and the portion below said supporting edge.

Said second, lower part of the new access chamber comprises the bottom of the chamber and the lower part of the side walls of the chamber itself, which may be smooth or ribbed.

The first, upper part of the new access chamber is made from a virgin plastic material, neither recycled nor regenerated.

The second, lower part of the new access chamber is made from a recycled plastic material.

The plastic material of the first, upper part and the plastic material of the second, lower part may be of the same type, for example polypropylene, or they may be of different types, for example polypropylene and polyethylene. According to the invention, said upper part of the access chamber may be made of a plastic material with added pigments, in such a way as to obtain a visible upper part in the desired colour.

The body of the access chamber formed in this way is preferably obtained by overmoulding: one of the two parts is produced by moulding, and the part obtained in this way is then inserted in a second mould, into which the plastic material used to make the other one of the two parts is injected.

According to the invention, the two parts can be produced separately by moulding and then joined together by mechanical assembly or welding.

A practical embodiment of the invention is illustrated in the attached drawing by way of non-limiting example.

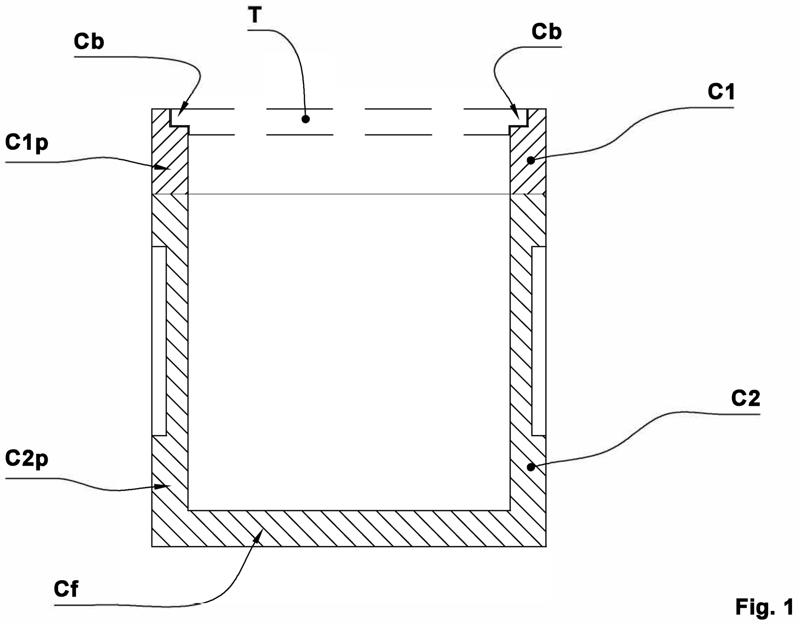

Figure 1 shows a sectional view of an example of embodiment of the access chamber (C1, C2). In this figure, the cover (T) of the access chamber (C1, C2) is hatched.

The new access chamber comprises two parts (C1, C2), the first, upper part (C1) and the second, lower part (C2).

Said first, upper part (C1) of the new access chamber (C1, C2) comprises the edge (Cb), on which the cover (T) rests, and the portion below said supporting edge (Cb).

Said second, lower part (C2) of the new access chamber (C1, C2) comprises the bottom (Cf) of the access chamber and the lower part of the side walls of the access chamber (C1, C2) itself.

The first, upper part (C1) of the new access chamber (C1, C2) is made of a virgin plastic material, neither recycled nor regenerated, while the second, lower part (C2) of the new access chamber is made of a recycled plastic material.

Said first, upper part (C1) of the access chamber (C1, C2) is made of a plastic material with added pigments.

The new access chamber (C1, C2) is preferably obtained by overmoulding: one (C2) of the two parts is produced by moulding, and the part (C2) obtained in this way is then inserted in a second mould, into which the plastic material used to make the other one (C1) of the two parts is injected.

The upper section of the new access chamber (C1, C2) obtained in this way features a visible part made of high-quality, coloured material, suitable for the context in which the new access chamber is installed.

The new access chamber has lower production costs than an access chamber where all parts are in the same colour, as its second, lower part (C2) can be made from a plastic material of lower quality and in any colour.

Therefore, with reference to the above description and the attached drawing, the following claims are made.

## Claims

1. Access chamber made of a plastic material, **characterized in that** it comprises two parts (C1, C2) made of different materials, *and wherein* the first, upper part (C1) comprising the supporting edge (Cb) for the cover (T) and the upper part (C1p) of the side walls (C1p, C2p) is made of virgin, non-recycled plastic, *and wherein* the second, lower part (C2) comprising the bottom (Cf) of the access chamber and the lower part (C2p) of the side walls (C1p, C2p) is made of a recycled plastic material.

2. Access chamber according to claim 1, **characterized in that** the first part (C1) and the second part (C2) are made of the same plastic material.

3. Access chamber according to claim 1, **characterized in that** the first part (C1) and the second part (C2) are made of two different plastic materials.

4. Access chamber according to claim 1, **characterized in that** the plastic material of the first, upper part (C1) contains added chemical substances or other materials designed to increase its mechanical resistance and/or its resistance to wear.

5. Access chamber according to claim 1, **characterized in that** the plastic material of the first, upper part (C1) contains added chemical substances or other materials designed to give said first, upper part (C1) a specific colour and/or appearance.

6. Access chamber according to the preceding claims, **characterized in that** said two parts (C1, C2) are obtained through moulding and overmoulding processes.

7. Access chamber according to claims 1, 2, 3, 4, 5, **characterized in that** said two parts (C1, C2) are obtained separately through a moulding process and joined mechanically at a later moment.

8. Access chamber according to claims 1, 2, 3, 4, 5, **characterized in that** said two parts (C1, C2) are obtained separately through a moulding process and subsequently joined together through a plastic welding process.
